# EUROPÄISCHE PATENTSCHRIFT

(11) **EP 1 211 282 B1**
(45) Veröffentlichungstag und Bekanntmachung des Hinweises auf die Patenterteilung: **01.12.2004**
(21) Anmeldenummer: 01125099.0
(22) Anmeldetag: 23.10.2001
(51) Int. Cl.: C08K 9/04, C08L 21/00

(54) **Kautschukmischung mit expandierten Schichtsilikaten**
Rubber mix comprising expanded layer silicates
Melange de caoutchouc comprenant un silicate à couches expansées

(30) Priorität: 29.11.2000 DE 10058297
(43) Veröffentlichungstag der Anmeldung: 05.06.2002
(73) Patentinhaber: ConiTech Holding GmbH, 30165 Hannover (DE)
(72) Erfinder: Herrmann, Wolfram, Dr., 31515 Wunstorf (DE); Mülhaupt, Rolf, Prof. Dr., 79117 Freiburg (DE)
(74) Vertreter: Schneider, Egon

(56) Entgegenhaltungen:
- US-A- 2 531 396
- US-A- 2 886 550

## Beschreibung

Die Erfindung betrifft eine vulkanisierbare Kautschukmischung.

Kautschukmischungen werden verschiedenste Füllstoffe, wie z. B. Ruß, Kieselsäure, Alumosilikate, Kaoline, Metalloxide oder Kreide, zugesetzt. Die Füllstoffe tragen dabei nicht nur zur Verbilligung der Kautschukmischungen bei, sondern beeinflussen durch ihre spezifische Wirkung auf den Kautschuk auch die Eigenschaften der unvulkanisierten Kautschukmischung und der Vulkanisate. Aktive Füllstoffe, auch verstärkende Füllstoffe genannt, zu denen die meisten Ruße, Kieselsäure und die meisten feinteiligen Silikate zählen, verbessern im Allgemeinen eine Reihe von Vulkanisateigenschaften, wie Zugfestigkeit, Spannungswert (Modul) und Weiterreißwiderstand, während andere Eigenschaften, wie Reißdehnung und Rückprallelastizität, negativ beeinflusst werden. Die Aktivität des Füllstoffes ist dabei abhängig von der Teilchengröße, der spezifischen Oberfläche, der geometrischen Gestalt der Oberfläche und der chemischen Zusammensetzung.

In der Vergangenheit wurden die bekannten Füllstoffe in mannigfaltiger Weise untersucht, verändert und modifiziert, um ihre verstärkende Wirkung zu optimieren. Außerdem wurden neue Füllstoffklassen erschlossen, um auch andere Eigenschaften der Vulkanisate zu beeinflussen.

Die Schichtsilikate bilden eine Füllstoffklasse, wobei sich bei Schichtsilikaten das Problem ergibt, dass sie aufgrund ihrer polaren Oberfläche nicht mit herkömmlichen Kautschuken kompatibel sind. D. h. man muss sie vor der Einbringung in eine Kautschukmischung so modifizieren, dass sie organophil und mit der umgebenden Kautschukmatrix kompatibel sind. Das Schichtsilikat lässt sich nur dann gut in der Kautschukmatrix verteilen. Um dies zu erreichen, ist es seit langem bekannt, die normalerweise hydrophile Oberfläche der Schichtsilikate durch Kationenaustausch mit Alkylammoniumionen so zu modifizieren, dass sie organophil wird. Die einzelnen organisch modifizerten Schichten lagern sich parallel übereinander an und bilden kleine Stapel, in denen sich organische und anorganische Schichten regelmäßig abwechseln.

Aus derartigen organisch modifizierten Schichtsilikaten lassen sich Nanocomposite aus Polymeren und Schichtsilikaten erzeugen. Ein Nanocomposit ist dabei definiert als eine wechselwirkende Mischung aus zwei Phasen, in diesem Fall Polymer/organische Phase und Schichtsilikat/anorganische Phase, von denen eine Phase zumindest in einer Dimension in der Größenordnung einiger Nanometer liegt.

Einen Überblick über Nanocomposite auf Basis von Polymeren und Schichtsilikaten, ihre Herstellung, Charakterisierung und Verwendung findet man z. B. in dem Artikel "Polymer layered silicate naonocomposites" von M. Zanetti, S. Lomakin und G. Camino in Macromol. Mater. Eng. 279, S. 1 - 9.
Für die Herstellung von Nanocompositen auf Basis von Polymeren und Schichtsilikaten werden dort vier Verfahren vorgestellt: die In-situ-Polymerisation, die Einlagerung (Intercalation) des Polmers aus einer Lösung, die direkte Einlagerung von geschmolzenem Polymer und die Sol/Gel-Technologie. Diese Verfahren führen dazu, dass die einzelnen Schichten des Silikates aufgeweitet werden und gegebenfalls sogar vollständig auseinander geblättert (exfoliert) werden. Die einzelnen Schichten haben eine Dicke von ca. 1 nm und sind von Polymer umgeben. Das Vorliegen von Nanocompositen in Polymerwerkstoffen ermöglicht es, die daraus hergestellten Polymerprodukte mit neuen und verbesserten Eigenschaften auszustatten. Das Konzept der Nanocomposite auf Basis von Schichtsilikaten wird vor allem im Bereich der Thermoplaste eingesetzt, um deren Eigenschaften z. B. im Hinblick auf die Zugfestigkeit zu verbessern. Für Thermoplaste sind die vier genannten Verfahren zur Herstellung von Nanocompositen anwendbar, wohingegen für Kautschuke die direkte Einlagerung des geschmolzenen Polymers aufgrund der hohen Viskositäten im herkömmlichen Verarbeitungstempraturbereich nicht möglich ist. Die anderen drei Verfahren sind auch für Kautschuk anwendbar, allerdings sind diese Verfahren technologisch sehr aufwendig und immer mit der Verwendung von Lösungsmitteln verbunden, die im weiteren Verlauf der Verarbeitung solcher Nanocomposite z. B. für die Einmischung in eine vulkaniserbare Kautschukmischung wieder i. A. vollständig entfernt werden müssen.

Aus der WO 97/00910 ist es bekannt, einen Latex herzustellen, der Schichtsilikat mit eingelagertem Emulsionspolymer enthält. Für die Herstellung solch eines Latex wird das Schichtsilikat zunächst durch lonenaustausch mit Oniumsalzen organophil ausgebildet und anschließend wird in einer Emulsion ein Kautschuk aus seinen Monomeren in Anwesenheit des organophilen Schichtsilkates in die Schichten des Silikates einpolymerisiert. Dabei bilden sich Nanocomposite aus. Nach der Koagulation und der Trocknung können derartige Nanocomposite in Kautschukmischungen z. B. für Reifeninnengummis mit verringerter Gaspermeabilität verwendet werden.

In der US 5,576,372 ist die Verwendung von Schichtsilikaten in Reifeninnengummis mit verringerter Gaspermeabilität beschrieben, wobei die Schichtsilikate mit einem reaktiven Kautschuk mit positiv geladenen Gruppen versehen werden. Die Schichtsilikate werden dazu mit einer Lösung, die den reaktiven Kautschuk enthält, i. A. einer Lösung mit organischem Lösungsmittel wie Toluol, behandelt. Der reaktive Kautschuk quillt in und zwischen die Schichten. Alle Lösungsmittel müssen im Anschluss vor der weiteren Verarbeitung, z. B. der Einmischung in eine Reifeninnengummimischung, entfernt werden. Darüber hinaus sind viele organische Lösungsmittel als ökologisch und toxikologisch bedenklich einzustufen.

Speziell behandelte Schichtsilikate für Kautschukmischungen mit verbesserten mechanischen Eigenschaften und verringerter Gasdurchlässigkeit sind auch aus der US 6,103,817 bekannt. Die speziellen Schichtsilikate werden vor der Einmischung in die Kautschukmischung zunächst durch lonenaustausch mit Oniumsalzen organophil ausgebildet und anschließend werden weitere organische Gastmoleküle aus organischem Lösungsmittel oder durch Behandeln des organophilen Schichtsilikates mit den flüssigen Gastmolekülen (bei Substanzen, die einen niedrigen Schmelzpunkt aufweisen) eingebracht/eingequollen, um den Abstand der Schichten im Schichtsilikat zu vergrößern und die Verteilung in der Kautschukmischung zu erleichtern und zu verbessern. Es können ein oder zwei verschiedene Substanzen in das Schichtsilikat eingebracht werden, wobei zumindest eine der Substanzen polare Gruppen aufweisen muss.

Den drei beschriebenen Verfahren ist gemeinsam, dass die Schichtsilikate vor der Einmischung in eine Kautschukmischung mit aufwendigen Verfahren so ausgebildet werden, dass die einzelnen Silikatschichten bereits vor der Einmischung durch Kautschukmoleküle voneinander getrennt werden, so dass Nanocomposite vorliegen.

Auch aus der US 2,531,396 und der US 2,886,550 sind verstärkte Elastomere bekannt, die als Füllstoff Schichtsilikate enthalten, die mit Alkylammoniumionen modifiziert sind. Aus der US 6,034,164 ist es bekannt, mit Alkylammoniumionen modifizierte Schichtsilikate direkt in eine Kautschukmischung aus zwei speziellen Kautschuken ohne vorherige Einquellung oder Einpolymerisation von Kautschuk oder Gastmolekülen einzumischen. Bei den Kautschuken handelt es sich zum einen um ein nicht-ionisches Polymer mit einem Molekulargewicht > 50000 g/mol und zum anderen um ein nicht-ionisches Polymer, das kompatibel mit dem ersten Polymer ist und dessen Molekulargewicht kleiner ist als das des ersten Polymers. Man erhält durch die während des Mischprozesses auftretenden Kräfte in der Mischung Schichtpakete aus modifiziertem Schichtsilikat mit einer Dicke von mehr als 10 nm. Das vollständige Auseinanderblättern (Exfoliation) soll dabei vermieden werden. Derartige Kautschukmischungen können für die Herstellung von gasundurchlässigen Elastomermembranen, wie z. B. Reifeninnengummis oder Heizbälgen, verwendet werden. Die Vulkanisate weisen verbesserte Spannungswerte bei gleichzeitig erhöhter Reißdehnung, gemessen im uniaxialen Zugversuch, auf. Derartige Mischungen können noch verstärkt zum Fließen neigen, was z. B. aus nahezu gleichbleibenden Spannungswerten bei 100 und 300 % Dehnung ersichtlich wird. Es ist bei diesen Mischungen darauf zu achten, dass das höhermolekulare und das niedermolekulare Polymer miteinander verträglich sind.

Der vorliegenden Erfindung liegt nun die Aufgabe zugrunde, eine Kautschukmischung bereitzustellen, die sich einfach und umweltfreundlicher herstellen lässt und deren Vulkanisate sich durch einen hohen Spannungswert und einen hohen Weiterreißwiderstand bei gleichzeitig guter Reißdehnung oder eine hohe Reißdehnung bei gleichzeitig gutem Spannungswert und gutem Weiterreißwiderstand auszeichnen. Es sollen demnach Materialien bereitgestellt werden, die trotz hoher Härte, Moduli und Festigkeit keine Versprödung zeigen.

Gelöst wird diese Aufgabe erfindungsgemäß dadurch, dass die Kautschukmischung, bezogen auf 100 Gewichtsteile der gesamten Kautschukkomponenten in der Kautschukmischung,
- 2 bis 25 phr zumindest eines Schichtsilikates, welches mit Alkylammoniumionen der allgemeinen Formel ⁺NR₄ modifiziert und frei von weiteren durch vorherige Behandlung eingequollenen oder einpolymerisierten Gastmolekülen ist, wobei die R in dem Alkylammoniumion gleich oder verschieden sein können und ausgewählt sind aus der Gruppe, bestehend aus Wasserstoff, substituierten oder unsubstituierten, gesättigten oder ungesättigten Alkylgruppen mit 1 bis 40 Kohlenstoffatomen mit oder ohne Verzweigung und substituierten oder unsubstituierten Aryl- und Benzylgruppen, wobei zumindest ein R eine substituierte oder unsubstituierte, gesättigte oder ungesättigte Alkylgruppe mit mehr als 8 Kohlenstoffatomen ist und
- 1 bis 50 phr zumindest eines Covemetzers zur Anbindung des modifizierten Schichtsilikates an die umgebenden Kautschukmoleküle, ausgewählt aus α,β-ungesättigten Säuren, Metallsalzen von α, β-ungesättigten Säuren, Estern der Acrylsäure, Estem der Methacrylsäure, aromatischen Allylestem, Allylethem, Allylcyanuraten, Bismaleinimid und 1,3-Bis(Citraconimidomethyl)benzol und einem zu einem Harz vemetzenden System, enthält.

Die in dieser Schrift verwendete Angabe phr (parts per hundred parts of rubber by weight) ist die in der Kautschukindustrie übliche Mengenangabe für Mischungen. Die Dosierung der Gewichtsteile der einzelnen Substanzen wird dabei stets auf 100 Gewichtsteile der gesamten Masse aller in der Mischung vorhandenen Kautschuke bezogen.

Covernetzer, auch Coagenzien genannt, sind bekannt als Substanzen, die Kautschukmischungen zugesetzt werden, um den Vernetzungsgrad zu erhöhen.

Überraschenderweise kann bei der Kautschukmischung mit der erfindungsgemäßen Kombination von modifiziertem Schichtsilikat mit Covernetzer festgestellt werden, dass der bei herkömmlichen Kautschukmischungen i. A. auftretende Konflikt zwischen Spannungswert und Reißdehnung der Vulkanisate gelöst werden kann. Zum einen kann man Mischungen herstellen, bei deren Vulkanisaten trotz einer starken Verbesserung des Spannungswertes und des Weiterreißwiderstandes die Reißdehnung auf gutem Niveau verbleibt. Zum anderen kann man auch Mischungen erzeugen, deren Vulkanisate eine sehr hohe Reißdehnung zeigen und deren Spannungswert und Weiterreißwiderstand aber gleich bleiben. Diese Effekte konnten erzielt werden, obwohl das Schichtsilikat nicht speziell in der Art vorbehandelt wurde, dass weitere Gastmoleküle, wie z. B. Kautschuk oder Substanzen mit polaren Gruppen, zwischen die Schichten des Silikates eingequollen oder einpolymerisiert wurden. Auch auf eine Verwendung von nicht-ionischen Polymeren mit einem Molekulargewicht < 50000 g/mol kann verzichtet werden.

Die genannten Effekte sind unerwartet, da bei herkömmlichen Mischungen ohne Schichtsilikate eine Erhöhung des Spannungswertes üblicherweise mit einer Verschlechterung der Reißdehnung einhergeht. Eine harte und mechanisch feste vulkanisierte Mischung ist nämlich i. A. spröder und reißt dadurch früher. Dabei ist es unabhängig davon, ob man den Spannungswert z. B. durch eine Erhöhung des Rußanteils oder einen höheren Vernetzungsgrad erreicht; beides wirkt sich negativ auf die Reißdehnung aus. Eine vulkanisierte Mischung dagegen, die nicht so einfach reißt, z. B. durch Verringerung des Vernetzungsgrades oder Verringerung des Rußanteils, weist einen geringen Spannungswert auf.

Eine Ursache für den überraschenden Effekt der erfindungsgemäßen Mischung könnte sein, dass die mit Alkylammoniumionen modifizierten, organophilen und schichtaufgeweiteten Schichtsilikate sich beim Mischvorgang gut in der umgebenden Kautschukmatrix verteilen und gegebenenfalls sogar weitgehend exfolieren - obwohl vor der Einmischung neben den Ammoniumionen keine weiteren Gastmoleküle zwischen die Schichten eingequollen oder einpolymerisiert wurden - und während des Mischen, der Weiterverarbeitung und der Vulkanisation eine Anbindung des modifizierten Schichtsilikates an die umgebenden Kautschukmoleküle über den Covernetzer im Zusammenspiel mit dem in der vulkanisierbaren Kautschukmischung vorhandenen Vernetzungsmittel erfolgt.

Die erfindungsgemäßen Mischungen weisen außerdem die Vorteile auf, dass sie als Vulkanisate durch die Anwesenheit der dünnen Plättchen des Schichtsilikates eine gute Sperrwirkung für Gase und Flüssigkeiten haben und eine hohe Beständigkeit gegen unterschiedlichste organische Medien aufweisen. Zusätzlich besitzen die Vulkanisate eine gute Flammwidrigkeit.
Die sehr dünnen Plättchen des exfolierten Schichtsilikates richten sich bei der Verarbeitung der Mischung aus (Richteffekt, Anisotropie) und bewirken eine zweidimensionale Verstärkung. Das Vulkanisat nimmt anisotrope Eigenschaften an. Mit herkömmlichen, nicht modifizierten Schichtsilikaten kann eine solche zweidimensionale Verstärkung kaum erreicht werden, da die einzelnen Schichten des Siikates nicht exfoliert werden, sondern als größere Anhäufungen in der Mischung vorliegen.

Die erfindungsgemäßen Kautschukmischungen können für die Herstellung von unterschiedlichsten Produkten verwendet werden. Nur beispielhaft seien hier Fahrzeugreifen, Antriebsriemen, Schläuche, Luftfedern, elastomerbeschichtete Stoffe, Schwingungsdämpfer, Transportbänder, Dichtungen, Membranen und Manschetten genannt.

Die Kautschukmischung enthält 2 bis 25 phr des Schichtsilikates; schon diese geringen Mengen reichen im Zusammenspiel mit dem Covernetzer aus, um Vulkanisate mit hohem Niveau von Spannungswert, Weiterreißwiderstand und Reißdehnung zu erhalten, wobei andere gewünschte Vulkanisateigenschaften ebenfalls nicht verschlechtert werden.

Gemäß einer bevorzugten Weiterbildung der Erfindung enthält die Kautschukmischung 2 bis 35 phr des Covernetzers. Diese Mengen an Covernetzer reichen aus, um die Vulkanisateigenschaften zu verbessern und eine ausreichende Anbindung des modifizierten Schichtsilikates an die umgebenden Kautschukmoleküle zu bewirken.

Als Ausgangsmaterial für die modifizierten Schichtsilikate können alle dem Fachmann bekannten natürlichen und synthetischen Schichtsilikate, die zum lonenaustausch geeignet sind, wie z. B. Montmorillonite, Smektite, Kaolinite und deren Gemische, die z. B. als unterschiedlichste Tonmineralien (z. B. Bentonit und Kaolin) in der Natur auftreten, verwendet werden. Die einzelnen Schichten der verwendeten Schichtsilikate sollten eine Schichtdicke von 0,8 bis 2,0 nm und die Schichtsilikatplättchen einen mittleren Durchmesser von 80 bis 800 nm aufweisen. Die kleinen, extrem dünnen Plättchen können optimal in der Kautschukmischung verteilt und dort angebunden werden.

Die Oberfläche der Schichtsilikate ist durch Kationenaustausch mit Ammoniumionen der allgemeinen Formel ⁺NR₄ modifiziert, wobei das modifizierte Schichtsilikat einen bevorzugten Kohlenstoffgehalt von 5 bis 50 Gew.-% aufweist. Die R in dem zur Modifizierung verwendeten Ammoniumion können gleich oder verschieden sein und sind ausgewählt aus der Gruppe, bestehend aus Wasserstoff, substituierten oder unsubstituierten, gesättigten oder ungesättigten Alkylgruppen mit 1 bis 40 Kohlenstoffatomen mit oder ohne Verzweigung und substituierten oder unsubstituierten Aryl- und Benzylgruppen, wobei zumindest ein R eine substituierte oder unsubstituierte, gesättigte oder ungesättigte Alkylgruppe mit mehr als 8 Kohlenstoffatomen ist. Dadurch werden Schichtsilikate erzeugt, deren Abstände zwischen den einzelnen Schichten vor einer weiteren Verarbeitung oder Einmischung bei 1,1 bis 5 nm liegen. Besonders bevorzugt ist, wenn für die erfindungsgemäße Kautschukmischung ein Schichtsilikat verwendet wird, das mit einem Dimethyldioctadecyl-, einem Benzyldioctadecylmethyloder einem Heptadec-8-en-1-yltrimethylammoniumion modifiziert ist. Derart modifizierte Schichtsilikate haben sich als besonders vorteilhaft bei der Lösung des Konfliktes zwischen Spannungswert und Reißdehnung erwiesen.

Die vulkanisierbare Kautschukmischung kann als Kautschukkomponenten alle dem Fachmann bekannten Kautschuktypen, wie z. B. Naturkautschuk, synthetisches Polyisopren, Polybutadien, Styrol-Butadien-Copolymer, Butylkautschuk, Ethylen-Propylen-Dienkautschuk (EPDM), Ethylen-Propylen-Copolymer, enthalten. Bevorzugt ist allerdings, wenn die Kautschukmischung als Kautschukkomponenten zumindest einen Kautschuk mit polaren Gruppen, vorzugsweise nur einen oder mehrere Kautschuke mit polaren Gruppen, z. B. Acrytnitril-Butadien-Kautschuk, hydrierten Acrylnitril-Butadien-Kautschuk (HNBR), hydrierten Acrylnitril-Butadien-Kautschuk mit Seitengruppen für verbesserte Kälteflexibilität, carboxylierten Acrylnitril-Butadien-Kautschuk, Styrol-Butadien-Copolymere und -Pfropfpolymere mit weiteren ungesättigten polaren Monomeren, Silikonkautschuk, Ethylen-Vinylacetat-Kautschuk, Ethylen-Acryl-Elastomere, Kautschuke mit Halogenatomen wie Chloroprenkautschuk, Fluorkautschuk, Epichlorhydrin-Kautschuk, alkyliertes chlorsulfoniertes Polyethylen, chlorsulfoniertes Polyethylen, chloriertes Polyethylen, enthält. Es hat sich gezeigt, dass Kautschuke mit polaren Gruppen die Anbindung des modifizierten Schichtsilikates an den Kautschuk mit Hilfe des Covernetzers noch unterstützen und man damit zu einer besonders guten Verstärkung gelangt. Zusätzlich zeichnen sich die Kautschuke mit polaren Gruppen durch eine hohe Beständigkeit gegen Öle und viele Chemikalien aus.

Vorzugsweise handelt es sich bei den Kautschuken mit den polaren Gruppen um hydrierten Acrylnitril-Butadien-Kautschuk oder Chloropren-Kautschuk. Neben der Beständigkeit gegen Öle und Chemikalien zeichnet sich Chlorpren-Kautschuk durch seine besonders hohe Abriebbeständigkeit aus. Hydrierter Acrylnitril-Butadien-Kautschuk weist zusätzlich ein gutes Alterungsverhalten und hohe Heißluftbeständigkeit auf.

Die erfindungsgemäße Kautschukmischung kann mit einem peroxidischen Vernetzungssystem, i. A. mit organischen Peroxiden wie z. B. 2,5-Dimethyl-2,5-bis(tert.butylperoxi)hexan, Di-tert.-butyl-peroxid, Tert.-Butylperbenzoat, Dicumylperoxid und 1,4-Bis(tert.-butylperoxiisopropyl)benzol, vulkanisiert werden. Dabei wird der oder werden die Covernetzer vorteilhafterweise ausgewählt aus der Gruppe, bestehend aus α,β-ungesättigten Säuren, Metallsalzen von α,β-ungesättigten Säuren, Estern der Acrylsäure, Estern der Methacrylsäure, aromatischen Allylestern, Allylethern, Allylcyanuraten, Bismaleinimid und 1,3-Bis(citraconimidomethyl)benzol. Diese Covernetzer werden durch das peroxidische Vernetzungssystem aktiviert und können dann in einem radikalischen Prozess sowohl mit den organischen Resten der Ammoniumionen auf der Oberfläche des Schichtsilikates als auch mit den umgebenden Kautschukmolekülen reagieren und so eine Anbindung des Schichtsilikates an den Kautschuk bewirken.
Im Folgenden seien Beispiele für vorteilhaft mit dem peroxidischen Vernetzungssystem wirkende Covernetzer genannt:
α,β-ungesättigte Säuren: z. B. Acrylsäure, Methacrylsäure
Metallsalze von α,β-ungesättigten Säuren: z. B. Zinkdiacrylat, Zinkdimethacrylat Ester der Acrylsäure: z. B. Trimethylolpropantriacrylat, Pentaerythritoltriacrylat, Neopentylglykoldiacrylat, Tetraethylenglykoldiacrylat, Ester aus Acrylsäure und Hydroxybenzolen oder Hydroxynaphthalinen
Ester der Methacrylsäure: z. B. Trimethylolpropantrimethacrylat, Tetraethylenglykoldimethacrylat, Ester aus Methacrylsäure und Hydroxybenzolen oder Hydroxynaphthalinen
aromatische Allylester: z. B. Diallylphthalat, Diallylisophthalat, Diallylterephthalat, Triallyltrimellitat
Allylether: z. B. Bis(allyl)polyethylenglycole, Bis(allyl)alkandiole
Allylcyanuraten: z. B. Triallylcyanurat, Triallylisocyanurat

Die erfindungsgemäße Kautschukmischung kann auch mit einem Vernetzungssystem auf Schwefelbasis, d. h. mit Schwefel oder Schwefelspendern, gegebenenfalls in Anwesenheit von Beschleunigern, vulkanisiert werden. Dabei wird als Covernetzer vorteilhafterweise ein zu einem Harz vernetzendes System verwendet. Als zu einem Harz vernetzende Systeme können dabei z. B. solche auf der Basis von Phenol oder einem Phenolderivat und Formaldehyd oder einem Formaldehydspender, von Inden und Cumaron, von Epoxid, von Kohlenwasserstoffen oder Alkylvinylethem verwendet werden. Das zu einem Harz vernetzende System ermöglicht während der Vulkanisation mit Schwefel eine zusätzliche Vernetzungsreaktion, die auch eine Anbindung des modifizierten Schichtsilikates an den Kautschuk über ein zusätzliches Netzwerk aus Harz erlaubt. Vorzugsweise wird ein System auf Basis von Phenol oder einem Phenolderivat und Formaldehyd oder einem Formaldehydspender verwendet. Eine Reaktion von Formaldehyd bzw. Formaldehydspender und Phenol bzw. Phenolderivat mit dem modifizierten Schichtsilikat kann besonders leicht erfolgen, wenn die Alkylammoniumionen zumindest einen aromatischen Rest R aufweisen, der einfach mit in die Vernetzungsreaktion zum Harz einbezogen werden kann.

Gemäß einer bevorzugten Weiterbildung der Erfindung enthält die Kautschukmischung zumindest ein niedermolekulares Polymer mit einem mittleren Molekulargewicht von weniger als 150000 g/mol, vorzugsweise ein Polyalkylenglykol, Ethylen-Propylen-Dienkautschuk, maleinsäureanhydridgepfropfter Ethylen-Propylen-Dienkautschuk, Acrylnitril-Butadien-Kautschuk oder trans-Polyoctenamer. Bei den niedermolekularen Polymeren kann es sich auch um solche handeln, die mit der umgebenden Kautschukmatrix wenig verträglich sind. Die Vorteile dieser Weiterbildung sind darin zu sehen, dass Vulkanisate aus solchen Kautschukmischungen eine verringerte Neigung zum Fließen, d. h. einen geringeren Druckverformungsrest, und eine geringe Dämpfung, d. h. eine hohe Rückprallelastizität, aufweisen. Durch die Zugabe der niedermolakularen Polymere lässt sich je nach Einsatzzweck die gewünschte Dämpfung einstellen.

Die erfindungsgemäßen Kautschukmischungen können weitere in der Kautschukindustrie übliche Füll- und Zusatzstoffe enthalten.

So kann die Kautschukmischung als weitere Füllstoffe z. B. feinverteilte, gefällte Kieselsäure, Ruß, Aluminiumoxide, Alumosilicate, Kreide, Stärke, Magnesiumoxid, Titandioxid oder Kautschukgele enthalten. Der Gesamtgehalt an Füllstoff kann dabei bis zu 150 phr betragen. Auch Kurzfasern z. B. aus Polyamid, Aramid oderr Polyester können der Kautschukmischung zugemengt sein.

Des Weiteren kann die erfindungsgemäße Kautschukmischung übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-lsopropyl-N'phenyl-p-phenylendiamin (IPPD), 2,2,4-Trimethyl-1,2-dihydrochinolin (TMQ), Zinksalze von 4- und 5-Methylmercaptobenzimidazol und andere Substanzen wie sie beispielsweise aus J. Schnetger, Lexikon der Kautschuktechnik, 2. Auflage, Hüthig Buch Verlag, Heidelberg, 1991, S. 42-48 bekannt sind, Silankupplungsagenzien wie z. B. Organosilanpolysulfide mit zwei bis acht Schwefelatomen und Vinylsilane, Verarbeitungshilfsmittel und Weichmacher wie z. B. Zinkoxid, Fettsäuren wie Stearinsäure, aromatische, naphthenische und/oder paraffinische Prozeßöle, Rapsöl und Wachse, Mastikationshilfsmittel wie z. B. 2,2'-Dibenzamidodiphenyldisulfid (DBD), Flammschutzmittel und Gleitmittel.

Wird die Vulkanisation in Anwesenheit von Schwefel oder Schwefelspendern, d. h. mit einem Vernetzungssystem auf Schwefelbasis, durchgeführt, wobei als Schwefelspender beispielsweise Thiuramderivate wie Tetrabenzylthiuramdisulfid und Dipentamethylenthiuramtetrasulfid, Morpholinderivate wie Dimorpholyldisulfid, Dimorpholyltetrasulfid und 2-Morpholinodithiobenzothiazol sowie Caprolactamdisulfid verwendet werden können, kann die Kautschukmischung des Weiteren vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid, Guanidinbeschleuniger wie z. B. Diphenylguanidin, Thiurambeschleuniger wie z. B. Tetramethylthiuramdisulfid, Dithiocarbamatbeschleuniger wie z. B. Zinkdibenzyldithiocarbamat, Aminbeschleuniger wie z. B. Cyclohexylethylamin, Thioharnstoffe wie z. B. Ethylenthioharnstoff (ETU), Xanthogenatbeschleuniger, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise in einer oder mehreren Mischstufen. Anschließend wird diese weiterverarbeitet und in die gewünschte Form gebracht. Dann wird in der dem Fachmann bekannten Art und Weise vulkanisiert, wobei die erhaltenen Produkte Vorteile hinsichtlich Spannungswert, Weiterreißwiderstand und Reißdehnung aufweisen.

Die Erfindung soll nun anhand von einigen Ausführungsbeispielen, die in den Tabellen 1 bis 3 zusammengefasst sind, näher erläutert werden, ohne jedoch auf diese Beispiele beschränkt zu sein.

Bei sämtlichen in den Tabellen 1 und 3 enthaltenen Mischungsbeispielen sind die angebenen Mengenangaben Gewichtsteile, die auf 100 Gewichtsteile Gesamtkautschuk bezogen sind (phr). In Tabelle 2 sind die Mengenangaben Gewichtsteile, die auf 100 Gewichtsteile HNBR bezogen sind. Die zu den entsprechenden Mischungen ermittelten Materialeigenschaften schließen sich in den Tabellen unterhalb der Mischungszusammensetzungen an. Alle Mischungen ließen sich mit dem Fachmann bekannten Verfahren einfach und unproblematisch mischen. Mit V bezeichnete Mischungen dienen als Vergleichsmischungen. Mit E sind erfindungsgemäße Mischungen bezeichnet.

In der Tabelle 1 sind peroxidisch vernetzte Mischungen aufgeführt, bei denen Zinkdiacrylat, unmodifiziertes Schichtsilikat, mit Dimethyldioctadecylammoniumionen modifiziertes Schichtsilikat und niedermolekulares Polymer allein oder in Kombination miteinander eingesetzt werden. Eine Vergleichsmischung ohne die genannten Substanzen ist ebenfalls in der Tabelle enthalten.

In der Tabelle 2 sind peroxidisch vernetzte Mischungen aufgeführt, die ausgehend von der Mischung E1 hergestellt wurden und die neben Zinkdiacrylat weitere Covernetzer oder spezielle niedermolekulare Polymere enthalten.

Tabelle 3 zeigt Mischungen, die mit einem Vernetzungssystem auf Schwefelbasis, nämlich mit einem Schwefelspender, vernetzt sind. Als Covernetzer wird ein zu einem Harz vernetzendes System auf Basis von einem Resorcinderivat und einem Formaldehydspender eingesetzt. Das Schichtsilikat ist mit Benzyldioctadecylmethylammoniumionen modifiziert.

Die verschiedenen Mischungen wurden bei 180 °C über maximal 30 min vulkanisiert und der Vulkanisationsprozess über ein rotorloses Vulkameter (MDR = Moving Disc Rheometer) gemäß DIN 53 529 verfolgt. Daraus wurden die Anfangs- und Endverformungskräfte Fₑ und Fₐ und deren Differenz als Maß für den Vernetzungsgrad und die Anbindung zum Füllstoff ermittelt.

Aus sämtlichen Mischungen wurden Prüfkörper durch 10-minütige (Mischungen der Tabellen 1 und 2) oder 20-minütige (Mischungen der Tabelle 3) Vulkanisation in einer Presse bei 180 °C hergestellt und mit diesen Prüfkörpern für die Kautschukindustrie typische Materialeigenschaften bestimmt. Für die Tests an Prüfkörpern wurden folgende Testverfahren angewandt:
- Shore-A-Härte bei Raumtemperatur gemäß DIN 53 505
- Rückprallelastizität bei Raumtemperatur gemäß DIN 53 512
- Zugfestigkeit bei Raumtemperatur gemäß DIN 53 504
- Reißdehnung bei Raumtemperatur gemäß DIN 53 504
- Spannungswerte bei 50 und 100 % Dehnung bei Raumtemperatur gemäß DIN 53 504
- Weiterreißwiderstand bei Raumtemperatur gemäß DIN 53 507
- Druckverformungsrest gemäß DIN 53 517, Zusammendrückung über 24 h bei 140 °C, Abkühlen im zusammengedrückten Zustand
- Zugverformungsrest gemäß DIN 53 518, Dehnung über 24 h bei 100 °C, Abkühlen im eingespannten Zustand

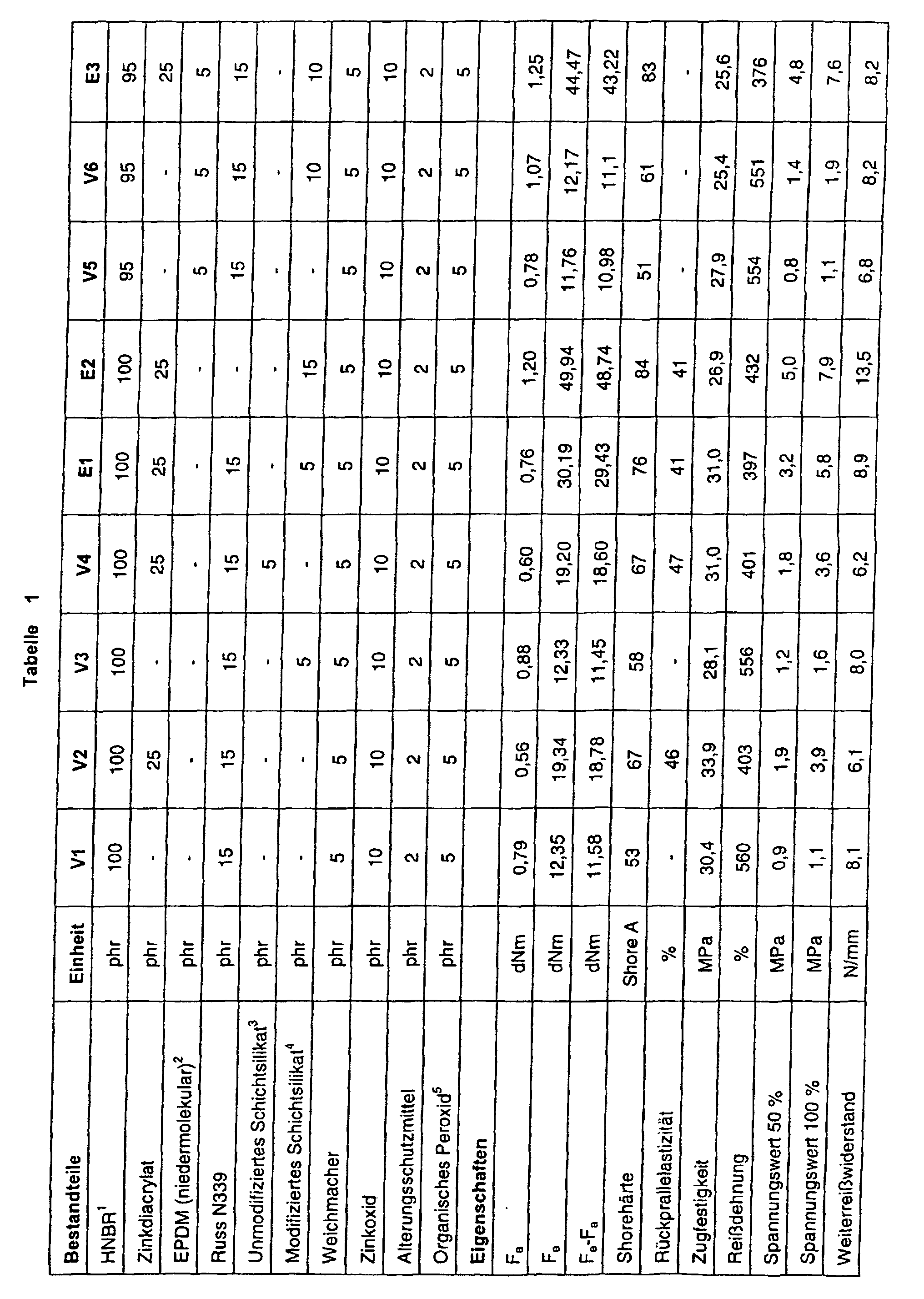

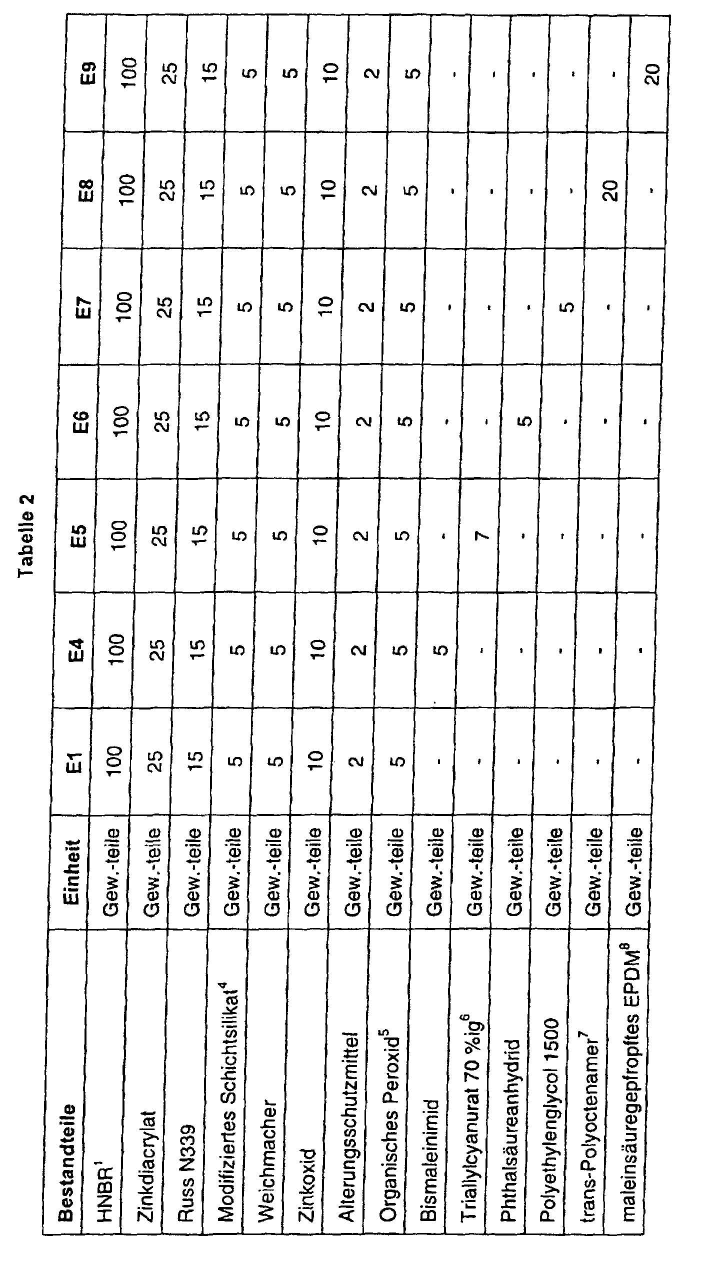

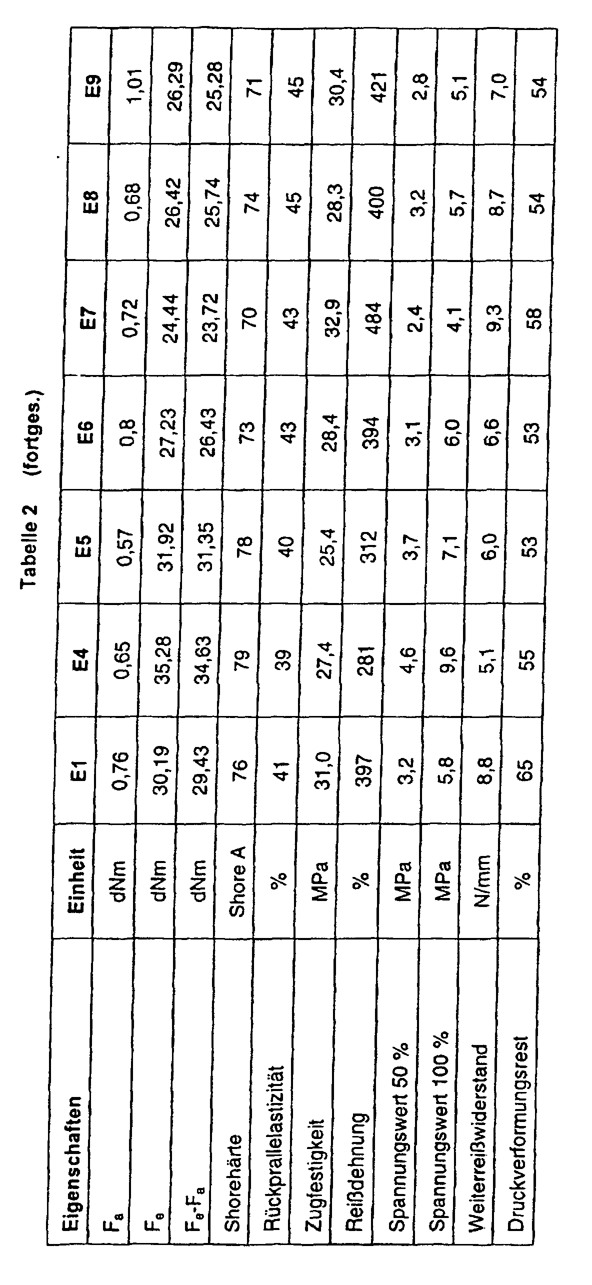

**Tabelle 3**

| **Bestandteile** | **Einheit** | **V6** | **V7** | **E10** | **E11** |
|---|---|---|---|---|---|
| Chloroprenkautschuk⁹ | phr | 100 | 100 | 100 | 100 |
| Russ N990 | phr | 22 | 7 | 7 | 7 |
| Kieselsäure | phr | 20 | 20 | 20 | 20 |
| Silankupplungsagens¹⁰ | phr | 2,2 | 2,2 | 2,2 | - |
| Modifiziertes Schichtsilikat¹¹ | phr | - | 15 | 15 | 15- |
| Zinkoxid | phr | 4 | 4 | 4 | 4 |
| Magnesiumoxid | phr | 3 | 3 | 3 | 3 |
| Weichmacher | phr | 16 | 16 | 16 | 16 |
| Lichtschutzwachs | phr | 1 | 1 | 1 | 1 |
| Stearinsäure | phr | 1 | 1 | 1 | 1 |
| Alterungsschutzmittel | phr | 4 | 4 | 4 | 4 |
| Schwefelspender TBzTD¹² | phr | 2,2 | 2,2 | 2,2 | 2,2 |
| Beschleuniger | phr | 1,5 | 1,5 | 1,5 | 1,5 |
| Resorcinderivat¹³ | phr | - | - | 4,5 | 4,5 |
| Formaldehydspender HMMM¹⁴ | phr | - | - | 2,3 | 2,3 |

| **Eigenschaften** | | | | | |
|---|---|---|---|---|---|
| Shorehärte | Shore A | 50 | 59 | 61 | 60 |
| Rückprallelastizität | % | 55 | 52 | 48 | 50 |
| Zugfestigkeit | MPa | 12,5 | 12,3 | 12,5 | 17,4 |
| Reißdehnung | % | 510 | 649 | 611 | 726 |
| Spannungswert 100 % | MPa | 1,2 | 1,6 | 2 | 2 |
| Zugverformungsrest | % | 20,4 | 35,4 | 29,4 | 28,5 |
| Weiterreißwiderstand | N/mm | 8,0 | 15,7 | 18,8 | 18,3 |

| | | | | | |
|---|---|---|---|---|---|
| ¹ hydrierter Acrylnitril-Butadien-Kautschuk, Acrylnitrilgehalt 34 %, Restgehalt an Doppelbindungen: 4 %, Mooney Viskosität ML (1 +4) 100 °C: 58 ² niedermolekularer Ethylen-Propylen-Dienkautschuk, Trilene 65, Uniroyal Chemical Ltd., England ³ Montmorillonit ⁴ Schichtsilikat Monimorillonit modifiziert mit Dimethyldioctadecylammoniumionen, Kohlenstoffgehalt ca. 30 Gew.-% ⁵ 1,4-Bis(tert.-butylperoxiisopropyl)benzol ⁶ Triallylcyanurat 70 %ig auf Trägermaterial Kieselsäure ⁷ Vestenamer 8012, Schill & Seilacher, Deutschland ⁸ Exxelor VA 1803, ExxonMobil Chemical, Deutschland ⁹ Baypren 126, Bayer AG, Deutschland | | | | | |
| ¹⁰ X50S, Degussa-Hüls, Deutschland | | | | | |
| ¹¹ Schichtsilikat Montmorillonit modifiziert mit Benzyldioctadecylmethylammoniumionen, Kohlenstoffgehalt ca. 25 Gew.-% | | | | | |
| ¹² Tetrabenzylthiuramdisulfid | | | | | |
| ¹³ Cohedur RK, Bayer AG, Deutschland | | | | | |
| ¹⁴ Hexamethoxymethylmelamin | | | | | |

Aus der Tabelle 1 wird ersichtlich, dass erst die Kombination von Zinkdiacrylat als Covernetzer mit modifiziertem Schichtsilikat (E1 und E2) die gewünschten Eigenschaftsverbesserungen der Vulkanisate hinsichtlich der Spannungswerte und des Weiterreißwiderstandes bei noch guter Reißdehnung erbringt, wobei ein Vergleich mit den Mischungen V2 und V3 belegt, dass diese Verbesserungen nicht auf rein additiven Effekten beruhen. Covernetzer (V2) oder Schichtsilikat (V3) allein zeigen ebenso wie der Einsatz von unmodifiziertem Schichtsilikat mit Covernetzer (V4) nicht die gewünschten Eigenschaftsverbesserungen. Würde man versuchen, bei einer ansonsten identischen Mischung die Spannungswerte in bekannter Weise durch Zugabe einer größeren Menge an Peroxid zu erhöhen, so wäre dies immer mit einer deutlichen Verminderung der Reißdehnung verbunden.
Aus der starken Zunahme von Fₑ-Fₐ bei den erfindungsgemäßen Mischungen im Vergleich zu den herkömmlichen Mischungen, kann man schließen, dass vermutlich eine sehr gute Anbindung des modifizierten Schichtsilikates an die umgebenden Kautschukmoleküle vorliegt.

Dosiert man niedermolekulare Polymere, wie niedermolekulares EPDM, zu den Mischungen, so hat das Polymer ohne die Anwesenheit von Covernetzer (V5) nur einen minimalen Einfluss auf die Vulkanisateigenschaften. Mit modifiziertem Schichtsilikat und niedermolkularem EPDM (V6) erzielt man zwar etwas bessere Vulkanisateigenschaften, die höchsten Spannungswerte und Weiterreißwiderstände erhält man aber erst bei Einsatz von Covernetzer, modifiziertem Schichtsilikat und niedermolekularem EPDM.

Tabelle 2 belegt, dass die Zudosierung weiterer Covernetzer oder niedermolekularer Polymere zusätzliche Vorteile in den Vulkanisateigenschaften bringen kann. Z. B. kann dadurch das Fließen der Vulkanisate verringert werden, was sich im Vergleich zu der E1 in niedrigeren Druckverformungsresten widerspiegelt. Auch das Dämpfungsverhalten, messbar über die Rückprallelastizität, kann beeinflusst und damit gesteuert werden. So wird beispielsweise die Dämpfung der Vulkanisate aus den Mischungen E6 bis E9 im Vergleich zu Vulkanisaten aus der E1 weiter verbessert.

Bei den Vulkanisaten aus der Mischungen der Tabelle 3 zeigt sich, dass die erfindungsgemäßen Mischungen E10 und E11 im Vergleich zu den Mischungen V6 und V7 einen besonders hohen Weiterreißwiderstand bei besonders guter Reißdehnung und auch noch etwas verbessertem Spannungswert bei 100 % Dehnung aufweisen. Diese guten Werte werden überrachenderweise auch erzielt, wenn man, wie bei der Mischung E11, auf das Silankupplungsagens, welches zur Anbindung der Kieselsäure an der den Kautschuk dient, verzichtet.

Ähnliche Ergebnisse wie in der Tabelle 3 wurden auch für schwefelvernetzte Kautschukmischungen mit HNBR als Kautschuk und mit dem Harzsystem (Resorcinderivat/Formaldehydspender) und dem Schichtsilikat (modifiziert mit Benzyldioctadecylmethylammoniumionen) aus Tabelle 3 erzielt. So wiesen die Vulkanisate der Ausgangsmischung ohne ein zu einem Harz vernetzendes System und ohne modifiziertes Schichtsilikat einen Spannungswert 100 % von 2,6 MPa, eine Zugfestigkeit von 29,9 MPa, eine Reißdehnung von 562 % und einen Weiterreißwiderstand von 25,6 N/mm auf, während die gleiche Mischung mit einem zu einem Harz vernetzenden System und einem modifizierten Schichtsilikat folgende Eigenschaften aufwies: Spannungswert 100 %: 3,6 MPa, Zugfestigkeit: 24,3 MPa, Reißdehnung: 617 % und Weiterreißwiderstand: 47,1 N/mm.

## Patentansprüche

1. Vulkanisierbare Kautschukmischung enthaltend, bezogen auf 100 Gewichtsteile der gesamten Kautschukkomponenten in der Kautschukmischung,
- 2 bis 25 phr zumindest eines Schichtsilikates, welches mit Alkylammoniumionen der allgemeinen Formel ⁺NR₄ modifiziert und frei von weiteren durch vorherige Behandlung eingequollenen oder einpolymerisierten Gastmolekülen ist, wobei die R in dem Alkylammoniumion gleich oder verschieden sein können und ausgewählt sind aus der Gruppe, bestehend aus Wasserstoff, substituierten oder unsubstituierten, gesättigten oder ungesättigten Alkylgruppen mit 1 bis 40 Kohlenstoffatomen mit oder ohne Verzweigung und substituierten oder unsubstituierten Aryl- und Benzylgruppe, wobei zumindest ein R eine substituierte oder unsubstituierte, gesättigte oder ungesättigte Alkylgruppe mit mehr als 8 Kohlenstoffatomen ist und
- 1 bis 50 phr zumindest eines Covernetzers zur Anbindung des modifizierten Schichtsilikates an die umgebenden Kautschukmoleküle, ausgewählt aus α,β-ungesättigten Säuren, Metallsalzen von α,β-ungesättigten Säuren, Estern der Acrylsäure, Estern der Methacrylsäure, aromatischen Allylestern, Allylethem, Allylcyanuraten, Bismaleinimid und 1,3-Bis(Citraconimidomethyl)benzol und einem zu einem Harz vemetzenden System.

2. Vulkanisierbare Kautschukmischung nach Anspruch 1, **dadurch gekennzeichnet, dass** sie 2 bis 35 phr des Covernetzers enthält.

3. Vulkanisierbare Kautschukmischung nach zumindest einem der Ansprüche 1 oder 2, **dadurch gekennzeichnet, dass** das modifizierte Schichtsilikat einen Kohlenstoffgehalt von 5 bis 50 Gew.% aufweist.

4. Vulkanisierbare Kautschukmischung nach zumindest einem der Ansprüche 1 bis 3, **dadurch gekennzeichnet, dass** das Ammoniumion ein Dimethyldioctadecyl-, ein Benzyldioctadecylmethyl- oder ein Heptadec-8-en-1 -yltrimethylammoniumion ist.

5. Vulkanisierbare Kautschukmischung nach zumindest einem der Ansprüche 1 bis 4, **dadurch gekennzeichnet, dass** sie als Kautschukkomponenten zumindest einen Kautschuk mit polaren Gruppen enthält.

6. Vulkanisierbare Kautschukmischung nach Anspruch 5, **dadurch gekennzeichnet, dass** sie als Kautschukkomponenten nur einen oder mehrere Kautschuke mit polaren Gruppen enthält.

7. Vulkanisierbare Kautschukmischung nach Anspruch 5 oder 6, **dadurch gekennzeichnet, dass** der Kautschuk mit den polaren Gruppen hydrierter Acrylnitril-Butadien-Kautschuk oder Chloroprenkautschuk ist.

8. Vulkanisierbare Kautschukmischung nach zumindest einem der Ansprüche 1 bis 7, **dadurch gekennzeichnet, dass** sie ein peroxidisches Vemetzungssystem enthält.

9. Vulkanisierbare Kautschukmischung nach Anspruch 8, **dadurch gekennzeichnet, dass** der oder die Covernetzer ausgewählt ist bzw. sind aus der Gruppe, bestehend aus α,β-ungesättigten Säuren, Metallsalzen von α,β-ungesättigten Säuren, Estern der Acrylsäure, Estern der Methacrylsäure, aromatischen Allylestern, Allylethem, Allylcyanuraten, Bismaleinimid und 1,3-Bis(Citraconimidomethyl)benzol.

10. Vulkanisierbare Kautschukmischung nach zumindest einem der Ansprüche 1 bis 7. **dadurch gekennzeichnet, dass** sie ein Vernetzungssystem auf Schwefelbasis enthält.

11. Vulkanisierbare Kautschukmischung nach Anspruch 10, **dadurch gekennzeichnet, dass** der Covernetzer ein zu einem Harz vernetzendes System, vorzugsweise auf der Basis von Phenol oder einem Phenolderivat und Formaldehyd oder einem Formaldehydspender, ist.

12. Vulkanisierbare Kautschukmischung nach zumindest einem der Ansprüche 1 bis 11, **dadurch gekennzeichnet, dass** sie zumindest ein niedermolekulares Polymer mit einem mittleren Molekulargewicht von weniger als 150000 g/mol enthält.

13. Vulkanisierbare Kautschukmischung nach Anspruch 12, **dadurch gekennzeichnet, dass** das niedermolekulare Polymer ausgewählt ist aus Polyalkylenglykolen, Ethylen-Propylen-Dienkautschuk, maleinsäureanhydridgepfropften Ethylen-Propylen-Dienkautschuk, Acrylnitril-Butadien-Kautschuk und trans-Polyoctenamer.

## Claims

1. Vulcanisable rubber mixture containing, in relation to 100 parts by weight of the total rubber components in the rubber mixture,
- 2 to 25 phr of at least one layer silicate which is modified with alkyl ammonium ions of the general formula ⁺NR₄ and free of additional guest molecules which have been soaked or polymerised in by prior treatment, the R in the alkyl ammonium ion being able to be identical or different and being selected from the group comprising hydrogen, substituted or unsubstituted, saturated or unsaturated alkyl groups having 1 to 40 carbon atoms, with or without branching, and substituted or unsubstituted aryl and benzyl groups, at least one R being a substituted or unsubstituted, saturated or unsaturated alkyl group having more than 8 carbon atoms, and
- 1 to 50 phr of at least one co-cross-linking agent to bind the modified layer silicate to the surrounding rubber molecules, selected from α,β-unsaturated acids, metal salts of α,β-unsaturated acids, acrylic acid esters, methacrylic acid esters, aromatic allyl esters, allyl ethers, allyl cyanurates, bismaleinimide and 1,3-bis(citraconimidomethyl)benzene and a system cross-linking to a resin.

2. Vulcanisable rubber mixture according to claim 1, **characterised in that** it contains 2 to 35 phr of the co-cross-linking agent.

3. Vulcanisable rubber mixture according to at least one of claims 1 or 2, **characterised in that** the modified layer silicate has a carbon content of 5 to 50 % by weight.

4. Vulcanisable rubber mixture according to at least one of claims 1 to 3, **characterised in that** the ammonium ion is a dimethyl dioctadecyl, benzyl dioctadecyl methyl or heptadec-8-en-1-yltrimethyl ammonium ion.

5. Vulcanisable rubber mixture according to at least one of claims 1 to 4, **characterised in that** it contains as the rubber component at least one rubber with polar groups.

6. Vulcanisable rubber mixture according to claim 5, **characterised in that** it contains as the rubber component only one or more rubbers with polar groups.

7. Vulcanisable rubber mixture according to claim 5 or 6, **characterised in that** the rubber with the polar groups is hydrogenated acrylonitrile-butadiene rubber or chloroprene rubber.

8. Vulcanisable rubber mixture according to at least one of claims 1 to 7, **characterised in that** it contains a peroxide cross-linking system.

9. Vulcanisable rubber mixture according to claim 8, **characterised in that** the co-cross-linking agent or agents is or are selected from the group comprising α,β-unsaturated acids, metal salts of α,β-unsaturated acids, acrylic acid esters, methacrylic acid esters, aromatic allyl esters, allyl ethers, allyl cyanurates, bismaleinimide and 1,3-bis (citraconimidomethyl) benzene.

10. Vulcanisable rubber mixture according to at least one of claims 1 to 7, **characterised in that** it contains a cross-linking system based on sulphur.

11. Vulcanisable rubber mixture according to claim 10, **characterised in that** the co-cross-linking agent is a system cross-linking to a resin, preferably on the basis of phenol or a phenol derivative and formaldehyde or a formaldehyde donor.

12. Vulcanisable rubber mixture according to at least one of claims 1 to 11, **characterised in that** it contains at least one low-molecular polymer having an average molecular weight of less than 150000 g/mol.

13. Vulcanisable rubber mixture according to claim 12, **characterised in that** the low-molecular polymer is selected from polyalkylene glycols, ethylene-propylene-diene rubber, maleic anhydride grafted ethylene-propylene-diene rubber, acrylonitrile-butadiene rubber and trans-polyoctenamer.

## Revendications

1. Mélange de caoutchouc vulcanisable contenant, rapporté à 100 parties en poids de l'ensemble des composants caoutchouteux du mélange de caoutchouc,
- 2 à 25 phr au moins d'un silicate en feuillets, lequel est modifié avec des ions d'alkylammonium de formule générale ⁺NR₄ et est exempt d'autres molécules réservoir polymérisées ou gonflées par le traitement préalable, sachant que les R dans l'ion d'alkylammonium peuvent être identiques ou différents, et sont choisis dans le groupe comprenant de l'hydrogène, des groupes alkyle substitués ou non substitués, saturés ou insaturés avec 1 à 40 atomes de carbone avec ou sans ramification, et des groupes aryles et benzyles substitués ou non substitués, sachant que au moins un R est un groupe alkyle substitué ou non substitué, saturé ou insaturé avec plus de 8 atomes de carbone et
- 1 à 50 phr d'au moins un dispositif de réticulation de couverture, pour le rattachement du silicate en feuillets modifié à la molécule de caoutchouc l'entourant, choisi parmi les acides insaturés α, β, les sels métalliques d'acides insaturés α, β, les esters d'acide acrylique, les esters d'acide méthacrylique, les esters allyliques aromatiques, les éthers allyliques, les cyanurates allyliques, l'imide bismaléique et le 1,3-Bis(Citraconimidomethyl)benzène et un système se réticulant en une résine.

2. Mélange de caoutchouc vulcanisable selon la revendication 1, **caractérisé en ce qu'**il contient de 2 à 35 phr du dispositif de réticulation de couverture.

3. Mélange de caoutchouc vulcanisable selon au moins une des revendications 1 ou 2, **caractérisé en ce que** le silicate en feuillets modifié présente une teneur en carbone de 5 à 50 % en poids.

4. Mélange de caoutchouc vulcanisable selon au moins une des revendications 1 à 3, **caractérisé en ce que** l'ion d'ammonium est un ion d'ammonium de diméthyldioctadécyle, de benzyldioctadécylméthyle ou un Heptadec-8-en-1-yltriméthyle.

5. Mélange de caoutchouc vulcanisable selon au moins une des revendications 1 à 4, **caractérisé en ce qu'**il contient comme composants caoutchouteux au moins un caoutchouc avec des groupes polaires.

6. Mélange de caoutchouc vulcanisable selon la revendication 5, **caractérisé en ce qu'**il contient comme composants caoutchouteux uniquement un ou plusieurs caoutchoucs avec des groupes polaires.

7. Mélange de caoutchouc vulcanisable selon la revendication 5 ou 6, **caractérisé en ce que** le caoutchouc avec les groupes polaires est un caoutchouc hydrogéné acrylonitrile-butadiène ou un caoutchouc de chloroprène.

8. Mélange de caoutchouc vulcanisable selon au moins une des revendications 1 à 7, **caractérisé en ce qu'**il contient un système de réticulation péroxydique.

9. Mélange de caoutchouc vulcanisable selon la revendication 8, **caractérisé en ce que** le ou les dispositifs de réticulation de couverture est et/ou sont choisis dans le groupe comprenant les acides insaturés α, β, les sels métalliques des acides insaturés α, β, les esters d'acide acyrlique, les esters d'acide méthacrylique, les esters allyliques aromatiques, les éthers allyliques, les cyanurates allyliques, l'imide bismaléique et le 1,3-Bis(Citraconimidométhyl)benzène.

10. Mélange de caoutchouc vulcanisable selon au moins une des revendications 1 à 7, **caractérisé en ce qu'**il contient un système de réticulation sur base sulfurique.

11. Mélange de caoutchouc vulcanisable selon la revendication 10, **caractérisé en ce que** le dispositif de réticulation de couverture est un système se réticulant en une résine, de préférence sur la base de phénol ou d'un dérivé de phénol et de formaldéhyde ou d'un donneur de formaldéhyde.

12. Mélange de caoutchouc vulcanisable selon au moins une des revendications 1 à 11, **caractérisé en ce qu'**il contient au moins un polymère de faible poids moléculaire avec un poids moléculaire moyen inférieur à 150000 g/mol.

13. Mélange de caoutchouc vulcanisable selon la revendication 12, **caractérisé en ce que** le polymère de faible poids moléculaire est choisi parmi les glycols de polyalkylène, le caoutchouc diénique d'éthylène-propylène, le caoutchouc diénique d'éthylène-propylène greffé par de l'anhydre d'acide maléique, le caoutchouc d'acrylonitril-butadiène et le trans-polyoctenamer.
